# EUROPEAN PATENT SPECIFICATION

(11) **EP 0 920 807 B1**
(45) Date of publication and mention of the grant of the patent: **28.02.2001**
(21) Application number: 97309040.0
(22) Date of filing: 11.11.1997
(51) Int. Cl.: A22B 1/00, A01K 1/00

(54) **System for moving animals towards a point of slaughter**
Anlage zum Treiben von Tieren zu einer Schlachtstation
Installation pour châsser les animaux vers une installation d'abbatage

(43) Date of publication of application: 09.06.1999
(73) Proprietor: MEAT AND LIVESTOCK COMMISSION, Snowdon Drive, Milton Keynes MK6 1AX (GB)
(72) Inventor: Walker, Geoffrey Ernest, Tipton, West Midlands, DY4 0BT (GB); Goodman, John David, Milton Keynes, MK4 1HN (GB)
(74) Representative: Skone James, Robert Edmund

(56) References cited:
- EP-A- 0 441 633
- DE-U- 29 507 943
- GB-A- 2 211 389
- US-A- 3 487 497
- US-A- 4 951 608

## Description

The present invention relates to a system for moving one or more animals towards a point of slaughter.

The traditional way of moving animals through a lairage to the point of stunning is for a stockman to herd them down the raceway.

A number of automatic lairage gates have been designed and some have been produced commercially. GB-A-2211389 uses a gate which travels along the raceway, and lifts and returns above the heads of the following pigs. This system suffers from a number of problems. Firstly, a complex support framework is required to lift and return the gate. Secondly, the movement of the gate over the heads of the following pigs induces high levels of stress which can result in reduced meat quality.

In accordance with a first aspect of the present invention there is provided a system for moving one or more animals towards a point of slaughter comprising confinement means for confining the animals in a raceway; and an urging device having
a) an open position in which the animal(s) can pass along the raceway in front of the urging device, and
b) a closed position in which it extends across the raceway to prevent following animals from passing along the raceway in front of the urging device and in which it can be expanded to urge the animal(s) which have already passed it towards the point of slaughter.

The system according to the present invention is particularly simple and inexpensive to manufacture and use. In addition, the urging device can be easily installed in an existing raceway. Further, the urging device does not need to return above the heads of the following animals and therefore induces less stress than previous urging devices, giving an improvement in meat quality.

The urging device may comprise a single member which expands uniformly, for instance by being blown up with air. However preferably the urging device comprises a base; an urging member; and an expandable connector which connects the urging member to the base.

The expandable connector may comprise a hydraulic or pneumatic cylinder which expands in the direction of expansion of the urging member. However, in a preferred example the expandable connector comprises a linkage mechanism, typically comprising one or more pairs of rods, each rod being pivoted at an intermediate point along its length to the other rod in the pair, and each rod being pivoted at each end to the end of an adjacent rod, to the base, or to the urging member. The linkage mechanism can then be operated by driving the end of one of the rods (in the manner of a scissor mechanism).

Typically the linkage mechanism comprises two or more pairs of rods - this gives greater expansion for a given movement of the driven rod.

Typically adjacent pairs of rods are arranged to define a parallelogram.

Preferably the base has a substantially planar rear surface. This induces less stress in the following animals.

Preferably the urging member has a substantially planar front surface. As a result the urging member can contact the animals without cause damage or distress.

The urging device may move between its closed and open positions in any required manner. For instance the urging device may be pivoted to the confinement means (eg a side wall) such that in its closed position the urging device lies flat against the side wall. However preferably the urging device is slid between its open and closed positions.

In its open position the urging device may be above or below the raceway. However preferably in its open position the urging device is on one side of the raceway. As a result no support structures are required above the animal(s).

If the urging device contacts an animal as it moves to its closed position, it may trap the animal, and/or induce stress in the animal. Therefore preferably the system further comprises a sensor which senses contact between the urging device and an animal as the urging device is moved from its open position to its closed position, and stops or reverses the movement of the urging device if contact is sensed.

The confinement means may comprise any suitable structure for confining the animal(s) to a desired location. However preferably the confinement means comprises one or more side walls. Typically the confinement means comprises a side wall having an opening through which the urging device can be moved between its open and closed positions.

If further control over movement is required, a plurality of urging devices may be provided. In a preferred embodiment a pair of urging devices is provided.

The system may be used to control any suitable species of animal, including pigs.

In accordance with a second aspect of the present invention there is provided a method of moving one or more animals along a raceway towards a point of slaughter, the method comprising
a) arranging a first urging device in an open position in which the animal(s) can move along the raceway past the urging device;
b) moving the urging device into a closed position behind the animal(s) in which it extends across the raceway to prevent following animals from moving along the raceway past the urging device; and
c) expanding the urging device to urge the animal(s) which have already passed it towards the point of slaughter.

The method can be repeated if necessary to move one or more following batches of animals by
d) contracting the urging device; and
e) repeating steps a) to d) one or more times to move the one or more following batches of animals towards the point of slaughter.

In a preferred embodiment the method further comprises providing a second urging device, and carrying out steps a) to d) with the second urging device out of phase with the first device whereby when each urging device is expanded the other urging device is in its open position.

An embodiment of the present invention will now be described with reference to the accompanying drawings, in which:-
Figure 1 is a plan view of an example of a system for moving one or more animals towards a point of slaughter;
Figure 2 is a front view in direction A of the system in Figure 1;
Figure 3 is a cross-section along line B of the system of Figure 1 with the right hand gate expanded and positioned in the raceway, and the left hand gate retracted in its positioned to one side of the raceway; and,
Figures 4A and 4B illustrate a method of urging one or more animals towards a point of slaughter using the system of Figures 1-3.

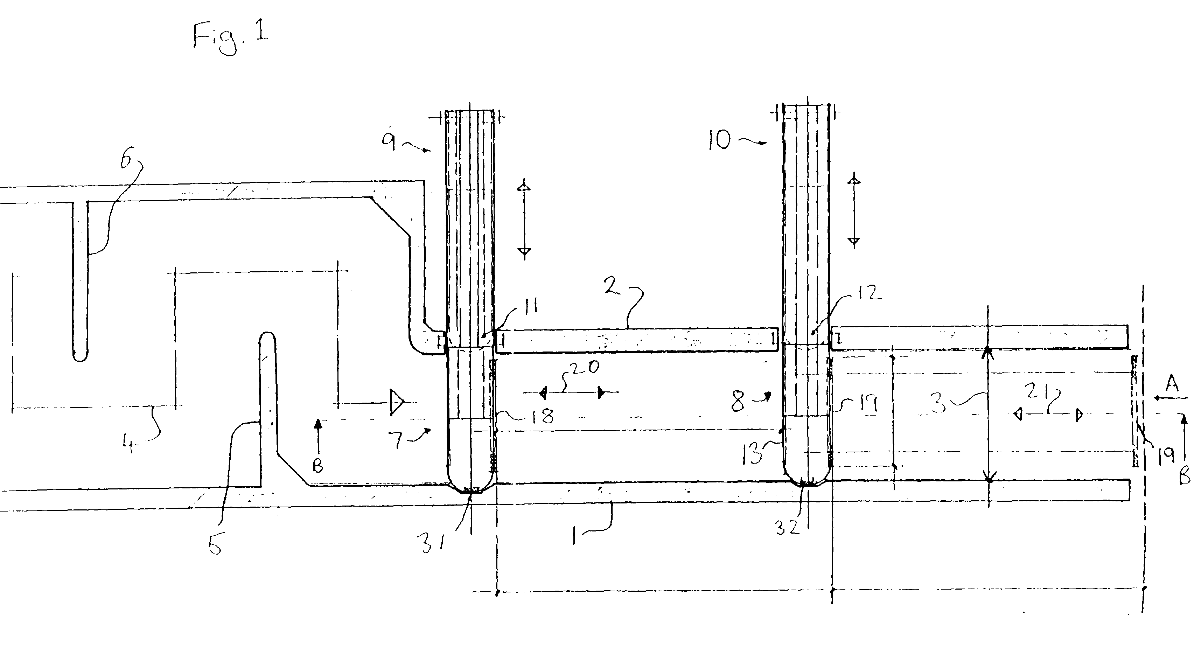

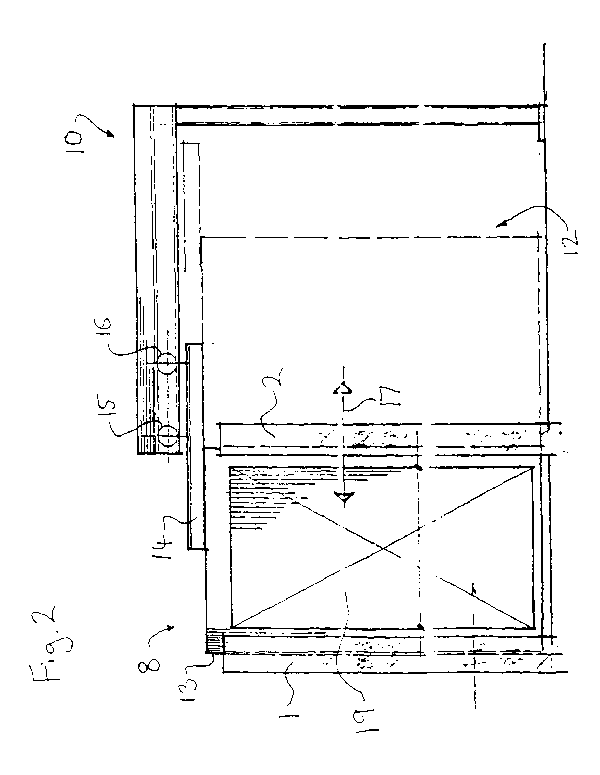

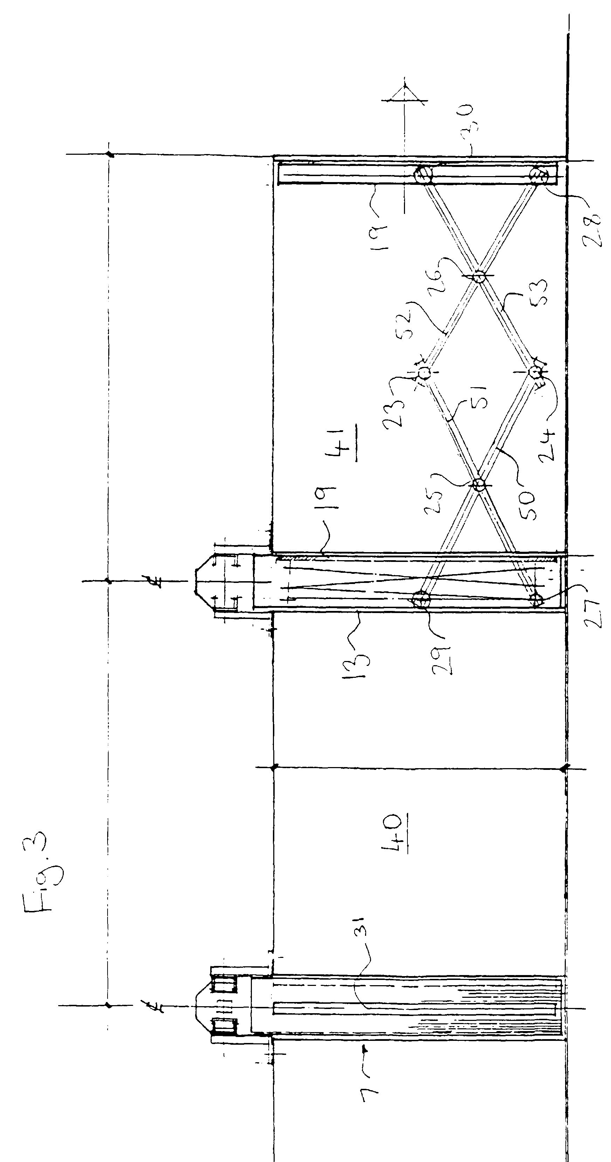

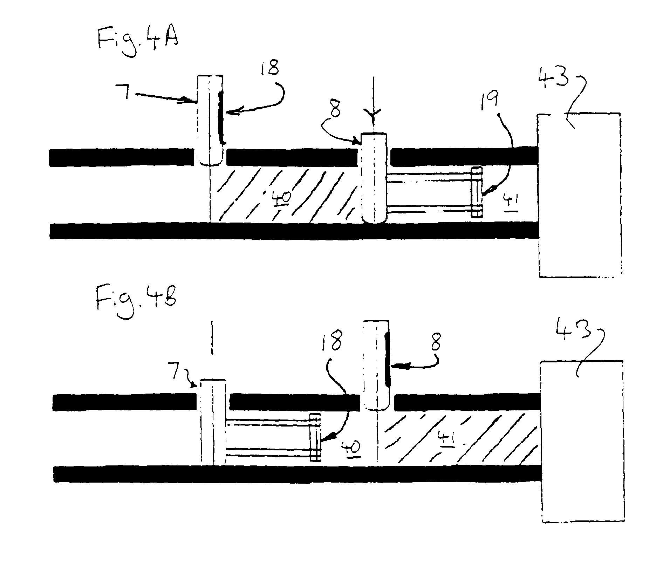

Referring to Figures 1-3, a system for moving batches of pigs from a lairage (not shown) located to the left of the system of Figure 1, to a CO₂ stunning unit (not shown) to the right of the system of Figure 1 comprises a pair of side walls 1,2 whose inner surfaces are spaced apart by a distance 3 of 900mm. The walls 1,2 define a raceway through which batches of pigs are led as indicated at 4. The walls 1,2 each have one or more staggered obstructions 5,6 etc. which create a series of bends in the raceway, thus preventing oncoming batches of pigs from being able to see along the entire length of the raceway. This reduces the level of stress in the oncoming batches of pigs.

A pair of lairage side gates 7,8 of identical construction, are supported on respective carriages 9,10 on one side of the raceway. The gates 7,8 have a width of approximately 1000mm and are shown in Figure 1 in solid lines in their closed position in the raceway, and in dotted lines at 11,12 in their open position at the side of the raceway.

Referring to Figure 2, the lairage side gate 8 comprises a frame 13 having a planar rear surface, with a horizontal deployment bar 14 slidably mounted in carriage 10 on linear bearings 15,16. The gate 8 and deployment bar 14 are shown in solid lines in Figure 2 in their closed position, and in dotted lines in their open position to one side of the raceway. The gate 8 is driven between its closed and open positions (as indicated at 17) by a pneumatic cylinder (not shown). The exhausts from the pneumatic cylinder and valves are piped away so that the noise of hissing spent air does not upset the pigs.

As can be seen in Figure 2, with the gate 8 open, there is no support framework remaining above the pigs casting shadows in their path.

The gates 7,8 each have a pusher plate 18,19. Batches of pigs are urged along the raceway by movement of the pusher plates 18,19 as indicated at 20,21. In Figure 1 the rear pusher plate 18 is shown in its retracted position, and in Figures 1 and 3 the front pusher plate 19 is shown in its retracted position and in its extended position.

The pusher plates 18,19 are mounted to their respective frames by a parallelogram linkage mechanism. The linkage mechanism of the front gate 8 is illustrated in Figure 3 with the pusher plate 19 in its retracted and extended position. The linkage mechanism comprises four rods 50-53 pivoted to each other at their ends 23,24 and at their centres at 25,26. Rod 51 is pivoted to the frame 13 at 27, and rod 52 is pivoted to the pusher plate 19 at 28. The end 30 of rod 53 is slidably mounted in the pusher plate 19, and the end 29 of rod 50 is driven up and down inside the frame 13 by a pneumatic cylinder (not shown). Hence by driving the end 29 of rod 50, the pusher plate 19 is driven between its extended position and its retracted position in which the linkage mechanism is housed in a cavity inside the frame 13. The pneumatic system (not shown) for driving the pusher plates 18,19 is also exhausted away from the raceway so that the noise of hissing spent air does not upset the pigs.

The gates 7,8 each have a contact sensor 31,32 which reverses the movement of the gate into the raceway if the gate contacts a pig as it is being moved across the raceway.

Operation of the system of Figures 1-3 is illustrated in Figures 4A and 4B which also illustrate a CO₂ stunning unit 43. The gates 7,8 and stunning unit 43 define a first compartment 40 and a second compartment 41. With gate 7 open and gate 8 closed (Figure 4A), pigs will naturally walk into the first compartment 40 because of their inquisitive nature. When three pigs are in the first compartment 40, gate 7 closes across the raceway to hold back the following pigs. Gate 8 then retracts to the position shown in Figure 4B and the pushing plate 18 within gate 7 begins to extend to gently push the pigs into the second compartment 41. At this point, the gate 8 slides to its closed position across the raceway, and the pusher plate 18 retracts and the gate 7 moves back to its open position at the side of the raceway ready for the next batch of three pigs. The pusher plate 19 within the gate 8 then gently pushes the pigs into the CO₂ standing unit 43 (Figure 4A). The pusher plate 19 then retracts ready for the next cycle.

The eight steps in a single cycle are illustrated below in Table 1. As can be seen in Table 1, the two gates are operated out of phase with each other such that when each gate is extended, the other gate is open.

**Table 1**

| **REAR GATE 7** | **FRONT GATE 8** |
|---|---|
| | Close |
| Open | |
| | Expand |
| | Contract |
| Close | |
| | Open |
| Expand | |
| Contract | |

Two gates 7,8 have been shown in this example but more gates could be linked together if more controlled movement is required.

Although the system has been illustrated for pigs, the system can be used with any species of animal in the lairage environment.

Although batches of three pigs are used in the system illustrated, any number of pigs can be used, for instance the compartments 40,41 could house batches of one, two or more than three pigs.

## Claims

1. A system for moving one or more animals towards a point of slaughter comprising confinement means for confining the animals in a raceway; and an urging device having
a) an open position in which the animal(s) can move along the raceway past the urging device, and
b) a closed position in which it extends across the raceway to prevent following animals from moving along the raceway past the urging device and in which it can be expanded to urge the animal(s) which have already passed it towards the point of slaughter.

2. A system according to claim 1 wherein the urging device comprises a base; an urging member; and an expandable connector which connects the urging member to the base.

3. A system according to claim 2 wherein the expandable connector comprises a linkage mechanism comprising one or more pairs of rods, each rod being pivoted at an intermediate point along its length to the other rod in the pair, and each rod being pivoted at each end to the end of an adjacent rod, to the base, or to the urging member.

4. A system according to claim 3 wherein the linkage mechanism comprises two or more pairs of rods.

5. A system according to claim 4 wherein each pair of adjacent pairs of rods is arranged to define a parallelogram.

6. A system according to any of claims 2 to 5 wherein the base has a substantially planar rear surface.

7. A system according to any of claims 2 to 6 wherein the urging member has a substantially planar front surface.

8. A system according to any of the preceding claims wherein in its open position the urging device is on one side of the raceway position.

9. A system according to any of the preceding claims wherein the urging device is slid between its open and closed positions.

10. A system according to any of the preceding claims further comprising a sensor which senses contact between the urging device and an animal as the urging device is moved from its open position to its closed position, and stops or reverses the movement of the urging device if contact is sensed.

11. A system according to any of the preceding claims wherein the confinement means comprises a side wall having an opening through which the urging device can be moved between its two positions.

12. A system according to any of the preceding claims further comprising one or more additional urging devices, each having
a) an open position in which the animal(s) can pass along the raceway in front of the urging device, and
b) a closed position in which it extends across the raceway to prevent following animals from passing along the raceway in front of the urging device and in which it can be expanded to urge the animal(s) which have already passed it towards the point of slaughter.

13. A method of moving one or more animals along a raceway towards a point of slaughter, the method comprising
a) arranging a first urging device in an open position in which the animal(s) can move along the raceway past the urging device;
b) moving the urging device into a closed position behind the animal(s) in which it extends across the raceway to prevent following animals from moving along the raceway past the urging device; and
c) expanding the urging device to urge the animal(s) which have already passed it towards the point of slaughter.

14. A method according to claim 13 further comprising
d) contracting the urging device; and
e) repeating steps a) to d) one or more times to move one or more following batches of animals towards the point of slaughter.

15. A method according to claim 13 or 14 further comprising providing a second urging device, and carrying out steps a) to d) with the second urging device out of phase with the first device whereby when each urging device is expanded the other urging device is in its open position.

## Patentansprüche

1. System zum Bewegen von einem oder mehreren Tieren zu einem Schlachtplatz, das ein Einsperrmittel zum Einsperren der Tiere in einem Gang aufweist und ein Treibgerät mit
a) einer offenen Position, in der das Tier bzw. die Tiere sich entlang dem Gang an dem Treibgerät vorbei bewegen können, und
b) einer geschlossenen Position, in der sich dieses über den Gang erstreckt, um eine Bewegung der nachfolgenden Tiere entlang dem Gang an dem Treibgerät vorbei zu verhindern, und in der es ausgedehnt werden kann, um das Tier bzw. die Tiere, die es bereits passiert haben, zu dem Schlachtplatz zu treiben.

2. System nach Anspruch 1, dadurch gekennzeichnet, daß das Treibgerät ein Basisteil, ein Treibelement und ein ausdehnbares Verbindungsteil aufweist, welches das Treibelement mit dem Basisteil verbindet.

3. Ein System nach Anspruch 2, dadurch gekennzeichnet, daß das ausziehbare Verbindungsteil einen Verbindungsmechanismus aufweist, der ein oder mehrere Paare von Stangen besitzt, wobei jede Stange an einem mittleren Punkt entlang ihrer Länge an die andere Stange in dem Paar angelenkt ist und jede Stange an jedem Ende an das Ende einer angrenzenden Stange, an das Basisteil oder an das Treibelement angelenkt ist.

4. System nach Anspruch 3, dadurch gekennzeichnet, daß der Verbindungsmechanismus zwei oder mehr Paare von Stangen aufweist.

5. System nach Anspruch 4, dadurch gekennzeichnet, daß jedes Paar von angrenzenden Stangen angeordnet ist, um ein Parallelogramm zu bilden.

6. System nach einem der Ansprüche 2 bis 5, dadurch gekennzeichnet, daß das Basisteil eine im wesentlichen ebene Rückfläche besitzt.

7. System nach einem der Ansprüche 2 bis 6, dadurch gekennzeichnet, daß das Treibelement eine im wesentlichen ebene Vorderflächen besitzt.

8. System nach einem der vorangehenden Ansprüche, dadurch gekennzeichnet, daß in seiner offenen Position das Treibgerät auf einer Seite des Gangs angeordnet ist.

9. System nach einem der vorangehenden Ansprüche, dadurch gekennzeichnet, daß das Treibgerät zwischen seinen offenen und geschlossenen Positionen gleitet.

10. System nach einem der vorangegangenen Ansprüche, das zusätzlich einen Sensor aufweist, der einen Kontakt zwischen dem Treibgerät und einem Tier fühlt, während das Treibgerät aus seiner offenen Position in seine geschlossene Position bewegt wird, und der die Bewegung des Treibgeräts stoppt oder umkehrt, wenn der Kontakt gefühlt wird.

11. System nach einem der vorangehenden Ansprüche, dadurch gekennzeichnet, daß die Einsperrmittel eine Seitenwand aufweisen, die eine Öffnung besitzt, durch die das Treibgerät zwischen seinen zwei Positionen bewegt werden kann.

12. System nach einem der vorangehenden Ansprüche, zusätzlich mit einem oder mehreren Treibgeräten, die folgendes aufweisen
a) eine offene Position, in der das Tier bzw. die Tiere sich entlang dem Gang an dem Treibgerät vorbei bewegen können, und
b) eine geschlossene Position, in der es sich über den Gang erstreckt, um eine Bewegung der nachfolgenden Tiere entlang dem Gang an dem Treibgerät vorbei zu verhindern, und in der es ausgedehnt werden kann, um das Tier bzw. die Tiere, welche es bereits passiert haben, zu dem Schlachtplatz zu treiben.

13. Verfahren zum Bewegen von einem oder mehreren Tieren entlang einem Gang zu einem Schlachtplatz, wobei das Verfahren folgendes aufweist,
a) Anordnen eines ersten Treibgeräts in einer offenen Position, in der die Tiere sich entlang dem Gang an dem Treibgerät vorbei bewegen können,
b) Bewegen des Treibgeräts in eine geschlossene Position hinter dem Tier bzw. den Tieren, in der es sich über den Gang erstreckt, um ein nachfolgendes Tier bzw. nachfolgende Tiere daran zu hindern, sich entlang dem Gang an dem Treibgerät vorbei zu bewegen, und
c) Ausdehnen des Treibgeräts, um das Tier bzw. die Tiere, welche es bereits passiert haben, zu dem Schlachtplatz zu treiben.

14. Verfahren nach Anspruch 13, zusätzlich aufweisend
d) Zusammenziehen des Treibgeräts und
e) Wiederholen der Schritte a) bis d) ein oder mehrere Male, um ein oder mehrere nachfolgende Schübe von Tieren zu dem Schlachtplatz zu bewegen.

15. Verfahren nach Anspruch 13 oder 14, zusätzlich aufweisend, das Bereitstellen eines zweiten Treibgeräts und Ausführen der Schritte a) bis d) mit dem zweiten Treibgerät außer Phase mit den ersten Treibgerät, wobei wenn eines der Treibgeräte ausgedehnt ist das andere Treibgerät sich in seiner geschlossenen Position befindet.

## Revendications

1. Système pour déplacer un ou plusieurs animaux vers un point d'abattage, comprenant un moyen de confinement pour confiner les animaux dans une piste; et un dispositif de poussée présentant
a) une position ouverte dans laquelle le ou les animaux peuvent se déplacer le long de la piste au-delà du dispositif de poussée, et
b) une position fermée dans laquelle il s'étend en travers de la piste pour empêcher les animaux suivants de se déplacer le long de la piste au-delà du dispositif de poussée, et dans laquelle il peut être étendu pour pousser le ou les animaux qui l'ont déjà dépassé, en direction du point d'abattage.

2. Système suivant la revendication 1, dans lequel le dispositif de poussée comprend une base; un organe de poussée, et un organe de liaison extensible qui relie l'organe de poussée à la base.

3. Système suivant la revendication 2, dans lequel l'organe de liaison extensible comprend un mécanisme de liaison comprenant une ou plusieurs paires de tiges, chaque tige pivotant en un point intermédiaire de sa longueur par rapport à l'autre tige de la paire, et chaque tige pivotant à chaque extrémité, par rapport à l'extrémité d'une tige adjacente, par rapport à la base, ou par rapport à l'organe de poussée.

4. Système suivant la revendication 3, dans lequel le mécanisme de liaison comprend deux ou plusieurs paires de tiges.

5. Système suivant la revendication 4, dans lequel chaque paire de paires de tiges adjacentes est agencée pour définir un parallélogramme.

6. Système suivant l'une quelconque des revendications 2 à 5, dans lequel la base a une surface arrière essentiellement plane.

7. Système suivant l'une quelconque des revendications 2 à 6, dans lequel l'organe de poussée a une surface avant essentiellement plane.

8. Système suivant l'une quelconque des revendications précédentes dans lequel, dans sa position ouverte, le dispositif de poussée se trouve d'un côté de la position de la piste.

9. Système suivant l'une quelconque des revendications précédentes, dans lequel le dispositif de poussée est glissé entre ses positions ouverte et fermée.

10. Système suivant l'une quelconque des revendications précédentes, comprenant en outre un détecteur qui détecte un contact entre le dispositif de poussée et un animal lorsque le dispositif de poussée est déplacé de sa position ouverte vers sa position fermée, et arrête ou inverse le mouvement du dispositif de poussée si un contact est détecté.

11. Système suivant l'une quelconque des revendications précédentes, dans lequel le moyen de confinement comprend une paroi latérale ayant une ouverture par laquelle le dispositif de poussée peut être déplacé entre ses deux positions.

12. Système suivant l'une quelconque des revendications précédentes, comprenant un ou plusieurs dispositifs supplémentaires de poussée présentant chacun
a) une position ouverte dans laquelle le ou les animaux peuvent passer le long de la piste devant le dispositif de poussée, et
b) une position fermée dans laquelle il s'étend en travers de la piste pour empêcher les animaux suivants de passer le long de la piste devant le dispositif de poussée, et dans laquelle il peut être étendu pour pousser le ou les animaux qui l'ont déjà dépassé en direction du point d'abattage.

13. Procédé pour déplacer un ou plusieurs animaux le long d'une piste vers un point d'abattage, le procédé comprenant les étapes consistant à
a) disposer un premier dispositif de poussée dans une position ouverte dans laquelle le ou les animaux peuvent se déplacer le long de la piste au-delà du dispositif de poussée;
b) amener le dispositif de poussée dans une position fermée derrière le ou les animaux, dans laquelle il s'étend en travers de la piste pour empêcher les animaux suivants de se déplacer le long de la piste au delà du dispositif de poussée, et
c) étendre le dispositif de poussée pour pousser le ou les animaux qui l'ont déjà dépassé en direction du point d'abattage.

14. Procédé suivant la revendication 13, comprenant en outre les étapes consistant à
d) rétracter le dispositif de poussée, et
e) répéter les étapes a) à d) une ou plusieurs fois pour déplacer un ou plusieurs lots suivants d'animaux vers le point d'abattage.

15. Procédé suivant la revendication 13 ou 14, comprenant en outre l'apport d'un deuxième dispositif de poussée, et la mise en oeuvre des étapes a) à d) avec le deuxième dispositif de poussée déphasé par rapport au premier dispositif, de telle sorte que, lorsque l'un de dispositifs de poussée est étendu, l'autre dispositif de poussée est dans sa position ouverte.
